# EUROPEAN PATENT SPECIFICATION

(11) **EP 1 897 747 B1**
(45) Date of publication and mention of the grant of the patent: **06.05.2009**
(21) Application number: 05753140.2
(22) Date of filing: 17.06.2005
(51) Int. Cl.: B60N 2/24, B60N 2/68, A47C 5/12

(54) **IMPROVED SEAT FRAME HAVING AN IMPROVED STRUCTURE**
VERBESSERTER SITZRAHMEN MIT EINER VERBESSERTEN STRUKTUR
CARCASSE DE SIEGE AMELIOREE POSSEDANT UNE STRUCTURE AMELIOREE

(43) Date of publication of application: 12.03.2008
(73) Proprietor: Productos Microcelulares De Colombia S.A. Promicol, Bogota (CO)
(72) Inventor: OVIEDO, Fabian Hernando, PROMICOLDA, Bogotá (CO)
(74) Representative: Cabinet Plasseraud
(86) International application number: PCT/IB2005/001700
(87) International publication number: WO 2006/134415

(56) References cited:
- EP-A2- 1 031 461
- DE-U1- 29 817 034
- ES-T3- 2 219 465
- ES-U- 165 664
- GB-A- 1 360 241
- US-A- 4 036 527

## Description

### OBJECT OF THE INVENTION

This invention is directed in a general way to the field of seat frames frame seats which present improvements that increase their technical performances and which in addition may present an improved structure. Especially this invention is directed to seat frames for vehicles of public service.

### BACKGROUND OF THE INVENTION

The first means of transport for passengers used seat frames made of rigid materials like wood whichwere gradually replaced with materials more flexible like feather that were more comfortable for the passenger for a fairly long journey. With the apparition of the flexible foam, a technological change began
where comfort and ergonomics were the principal objectives. From that moment, various types of seat frames were developped with metallic structures and fiberglass structures that supported the foam.
Regrettably this kind of structure is usually attacked by acts of vandalism (the foam is stained with markers or cut with sharp objects) that deteriorate the quality of the seat and the inside aspect of the vehicle.

In industrialized countries like Spain or Germany the traditional frame concepts were copied for foam seats applying the procedures for transformation of thermoplastics, initially obtaining frame seats having the traditional square form for the back and the base of a vehicle seat. The companies that in the mid-nineties had a great development with this new application of seats are called Grammer Industrie GmbH with the model "Compact", Comprehensive System of Esteban Seats with the model "Urban 90" and Vogel Industrie GmbH with the model "Pine". By producing seats with this technique, a variation in the angle of the back of the seat is produced in the cooling cycle because of the process of dimensional contraction which causes the frame displacement. When the frame is installed with a conventional support it presents the disadvantage that the back of the seat does not flt exactly to the structure, obliging to manually alter piece by piece thus increasing the Installation time and Incurring additional costs.
US-A-4036527 (corresponding to the preamble of claim 1) describes connecting supports which are embedded inside a seat frame. These supports are not in contact with a polymeric material used to make the seat frame.
Besides, it facilitates cleaning which is a factor of great importance with respect to the internal aspect and the hygiene of the vehicles for transport of passengers. For this reason, the vehicles are washed with water, generating the inconvenience of leaving residual water in the base of the seat after being washed with different detergents and water, contributing to early deterioration of said base and generating large losses of mechanical strength of the resin the seat is made with. In addition, the Inside of these vehicles is designed for people of medium and high height, and a kid or a small person cannot safely stand inside the vehicle because usually there Is only one vertical tube handrail implementation and the frames for the aforementioned seats do not have an extra mechanism for holding on. In the event the vehicle has to make an emergency stop, this people are the ones who suffer most injuries and corporal lesions.
Finally during the process of elaboration of the seat frames, more precisely, during the setting of the polymeric material, the angles between the base and the back of the seat are altered with respect to the angle they were given In the mold, generating problems at the time of the installation because a seat frame does not coincide with the supports previously arranged; creating difficulties In assembling the seat frame, thus Incurring overrun costs.

### SUMMARY OF THE INVENTION

The Invention is directed to a seat frame as defined in claim 1 which presents improvements that Increase its technical performances and which in addition may present an improved structure that solves the problems of the prior art. This frame can be made of a thermoplastic material or a special alloy material (example: fiberglass, resin, etc) and by traditional process of transformation. This frame is durable because of the toughness of the material and the resistance to tearing so it makes the frame suitable against acts of vandalism. In addition, these materials are easy to clean in contrast with the seats made of foam. This frame for the seat has a system of drain that stops the discoloration and the loss of the mechanical resistance caused by residual water. The safety of children and small persons is improved by incorporating two lateral handles. With its ergonomic design and the (optional) nonskid surfaces, the adherence of the user to the seat Is ensured. The frame of the seat has at least one hole or slit on the right and on the left side of the back which is called "lateral handle for holding on" and it serves principally for being held by children and small persons. Optionally, the metal structures may be inserted Into the frame of the seat before the injection process to reduce the variations of the angle between the base and the back of the seat which was generated during consolidation. Thanks to that, the structure works as a skeleton which, stops the free movement of the frame at the moment of consolidation. In this way the duration and the Indirect costs for installing the frame of the seat Inside the vehicle are decreased. In addition, the frame of the seat may have an additional hole in the sides of the back of the seat that may be employed as a fastening mechanism for security means like a belt or a harness. In the upper part of the back of the seat there is a hole that forms the principal handle. In the middle of the base of the seat there is a wide hole that works as a drain or as a fastening zone for installing a harness or a safety belt. This drain makes the water flow efficiently, avoiding to keep residues of water or detergent that attack the material and deteriorate the aspect of the frame on the inside and outside. Nowadays, the frames which do not present this drain suffer from accelerated ageing that creates discoloration on parts of the seat. The back of the frame of the seat may present nonskid device to mitigate the forces of inertia generated, for example, by an unexpected braking.

### BRIEF DESCRIPTION OF THE DRAWINGS

Figure No. 1 is the isometric of the conventional support of the state of art.
Figure No. 2 and No 3 are the lateral and frontal view of the conventional support of the state of art.
Figure No 4 is the view In the isometric of the cavity of the mold of the state of art.
Figure No. 5 is the closer view of the previous mold of the state of art.
Figure No. 6 is the lateral view of the two frames together in which we can appreciate the difference in the angle in the hardening.
Figure No. 7 is the back view of the ensemble of the conventional supports with the frames of the seat In the state of art.
Figure No. 8 is the exploded view of the ensemble of the two frames for the seats Including the respective conventional supports and the fixation structure according to the state of art.
Figure No. 9 Is the new developped support of the invention.
Figure No. 10 is the lateral view of the previous support.
Figure No. 11 Is an isometric view of the position of the new support inside the mold.
Figure No. 12 is a closer view of figure No. 11
Figure No. 13 is the back view of the frame of the seat with the new developped supports.
Figure No. 14 is the exploded view of the ensemble of the frame with the supports embedded inside.
Figure No. 15 corresponds to the resistance analysis made to the conventional support.
Figure No. 16 is a detail view of figure No. 15.
Figure No. 17 is a comparative view of the movement cause to the conventional support when a force of 875 Newton Is applied according to the state of art.
Figure No. 18 corresponds to the resistance analysis made to the new support develop in the invention.
Figure No. 19 is a close view of the previous image.
Figure No. 20 is a comparative view of the movement caused to the new support when a force of 875 Newton is applied.
Figure No. 21 is the isometric view of the first embodiment of the frame for seats.
Figure No. 22 Is a frontal view of the Figure No. 23.
Figure No. 23 correspond to the back view of the first embodiment of the invention.
Figure No. 24 is the lateral view of the previous figure.
Figure No. 25 is the frontal view of the second embodiment of the invention of the frame for seats.
Figure No. 26 is the lateral view of the previous figure.
Figure No. 27 is the isometric view of the second embodiment of the invention.
Figure No. 28 is the lateral view of the third embodiment of the invention.
Figure No. 29 is the lateral view of the previous figure.
Figure No. 30 is the higher view of the third embodiment of the invention.
Figure No. 31 is the isometric view of the previous figure.
Figure No. 32 is the frontal view of the fourth embodiment of the invention.
Figure No. 33 is the lateral view of the previous figure.
Figure No. 34 is the higher view of the fourth embodiment of the invention.
Figure No. 35 is the isometric view of the previous figure.

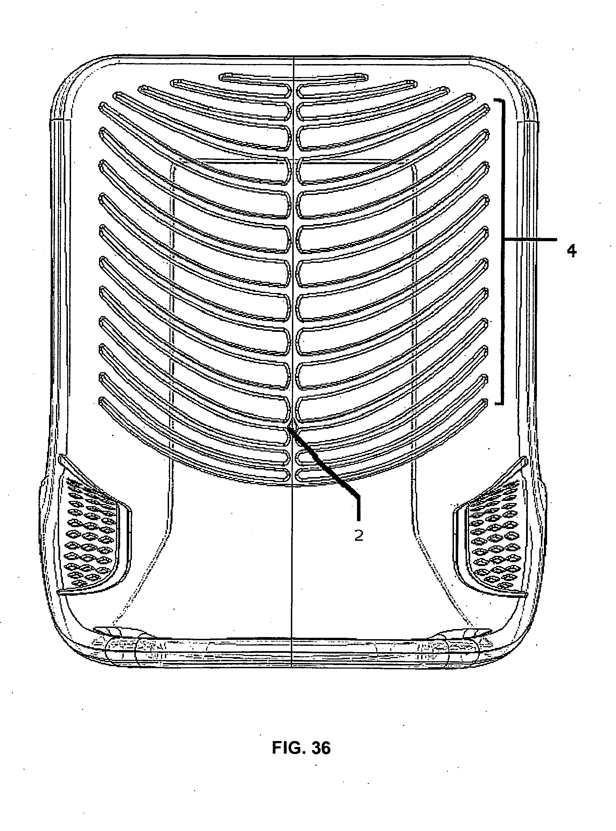

Figure No. 36 is a higher view in detail of the fourth embodiment of the invention of the frame for seat.

### DESCRIPTION OF THE PREFERRED EMBODIMENTS OF THE INVENTION

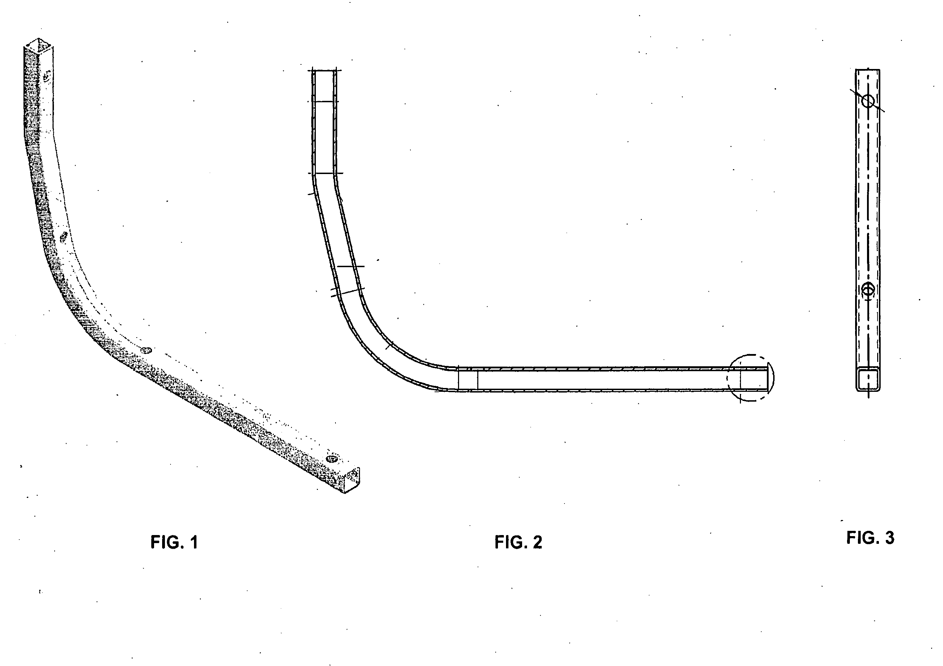

In reference to the figure No. 1 it can be appreciated a conventional metallic support of the state of art that works as a connection between the frame for the seat and the structure. This has four perforations in which the screws work as a connection between the support and the frame to fix one in another. During the settlement of the support in the frame according to the method of the state of art the support is fixed to the frame -which had no rigid elements- by the screws of connection but with the problem that frame may move because of the lack of the rigid element. This happens during the time of consolidation or the moment of forge and after the process of injection of the polymeric material during the process of elaboration of the frame. As a consequence of the above, the original angles of the frames varied on the moment of consolidation between the base and the back of the seat. This created problems of delays the moment the frames were going to be inserted in the metal support in the stage of assembly of the seats in the vehicle because of accommodation of the angles had to be manual. These delays generated extra costs.

Now, In reference to the figure No. 2 and 3 It can be appreciated the lateral and frontal view of the support of the state of art shown In figure No. 1.

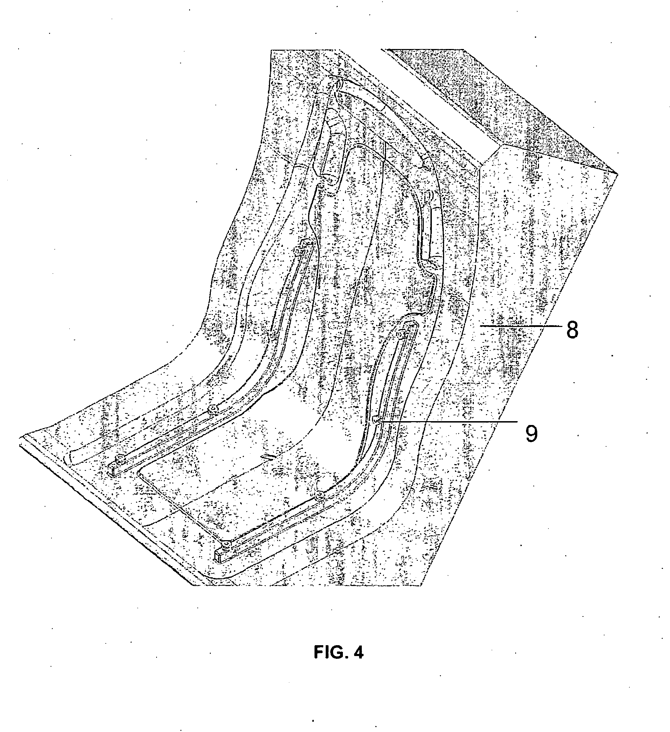

From figure No. 4 It can be appreciated an Isometric view of the mold In which the first embodiment of the frame is made. In this figure is mark the body of the mold (8) and the Inserts of fixation (hexagonal nuts) (9) previously lodged in the mold for then proceed to the injection of the polymeric material.

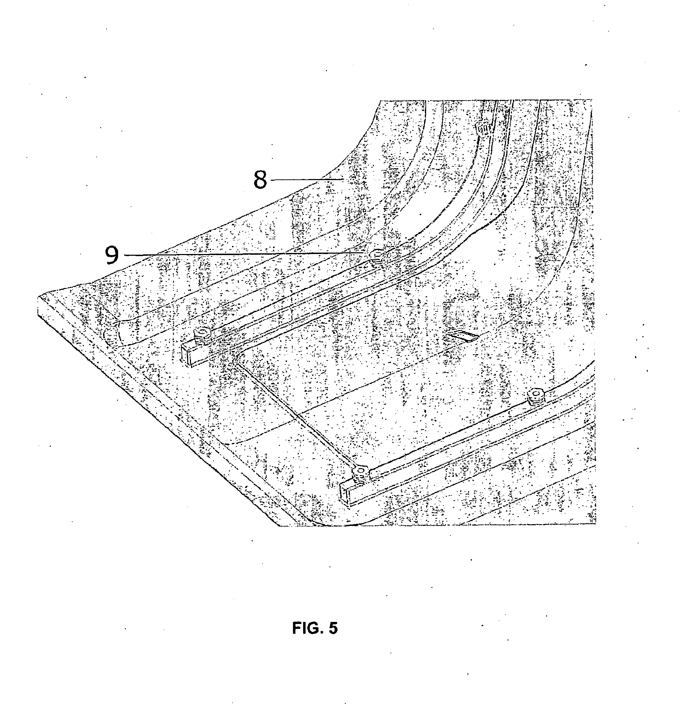

In reference to the figure No. 5 we can appreciate in it an amplify view of figure No. 4, previous, were we can observe with more detail (amplify way) the metallic inserts (hexagonal nuts) designed by No. 9. These nuts are place manually by a metallic pin which is part of the mold.

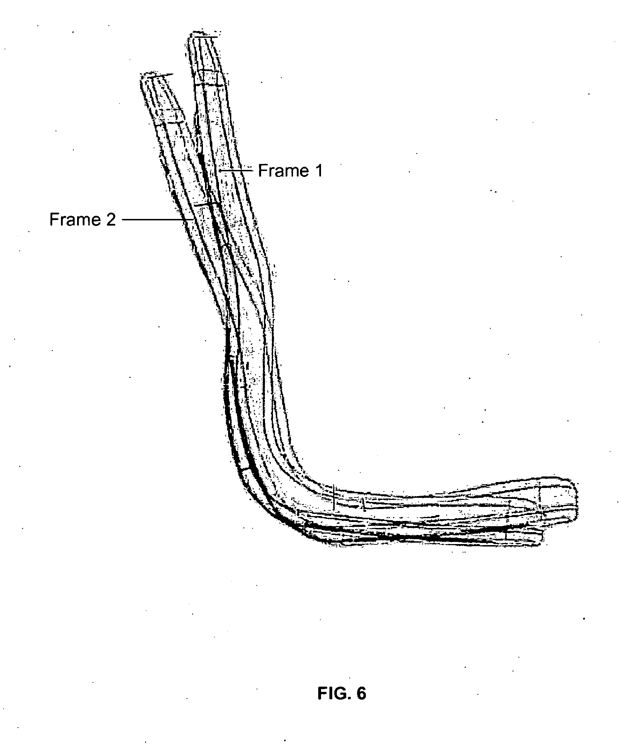

In relation to figure No. 6 we can appreciate a lateral view of the two frames
where the difference of the angle is compare between the back and the base of the seat originated In the cooling or hardening phase of the polymeric. This effect happens in the frame for frame for seats of the state of art and in the embodiments which does not have inserted the metallic support that brings additional rigidness to the frames. So the frames for frames for seats that have the metallic support fix In the frame have a technological advantage.

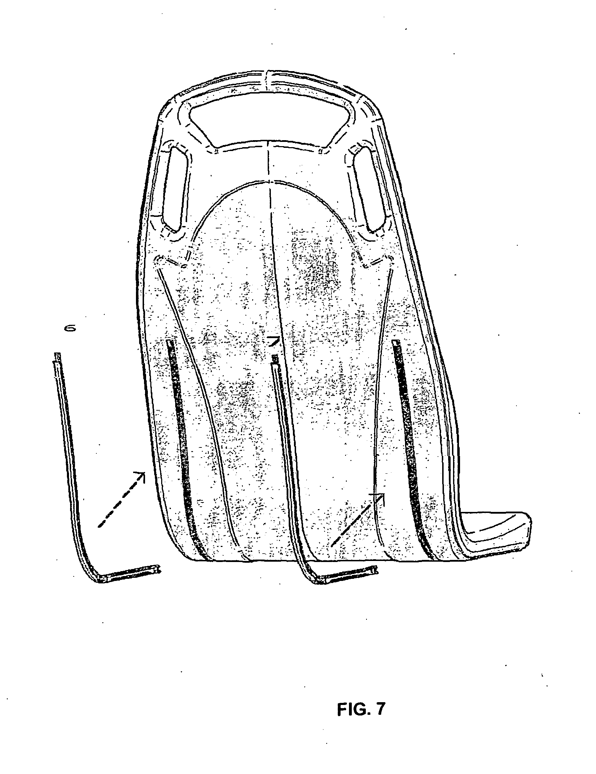

In reference with figure No. 7 we can observe the way how the conventional metallic supports designated by numbers 6 and 7 must be fixed to the frame for the seat according to the state of art.

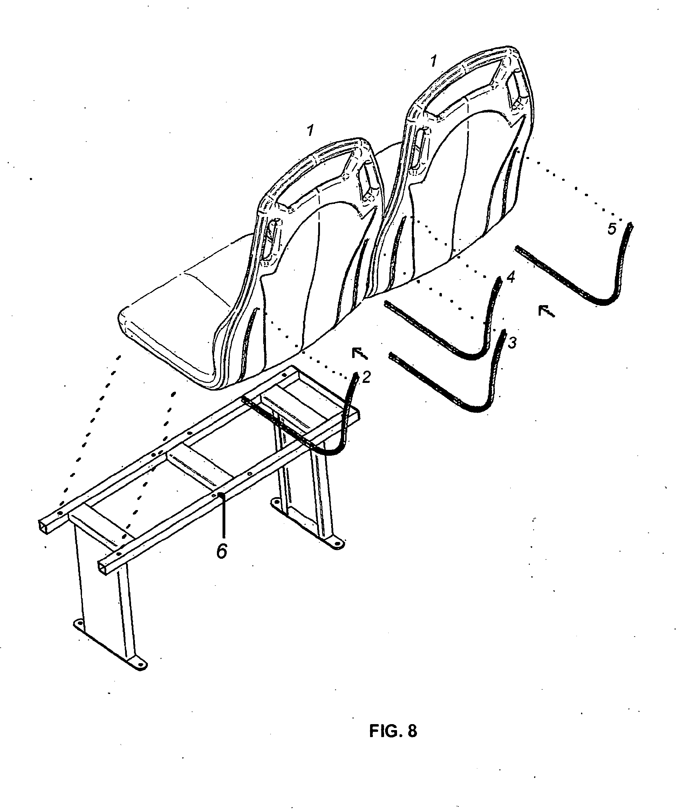

In figure No. 8 we can appreciate an exploded view in the frame for frame for seat of the first embodiment designated by number 1, the conventional connecting support of figure No 1 designated by numbers 2 to 5 and the structure of the support related by number 6. This frame has a back and a base of the seat and it is made of a polymeric material that can be any material made for this end but is preferred to be polythene of high density. This frame for the seat has a nonskid design in this case a corrugate that cannot be appreciated in the image. In addition it has an perforation or a hole that avoids liquid substances to accumulate in the base of the frame of the seat. It has a slit which extends along the width of the upper part of the back of the seat that is a part of the principal handle and two longitudinal slits which extend vertically along the lateral parts of the sides of the seat and which form part of the lateral handles. The hardness of the material makes the acts of vandalism difficult and besides makes easier the cleaning when it has been stained. On the other hand, the hole makes impossible the accumulation of substances like water or detergent or other liquid substances that may fall accidentally and accumulate on the base of the seat.

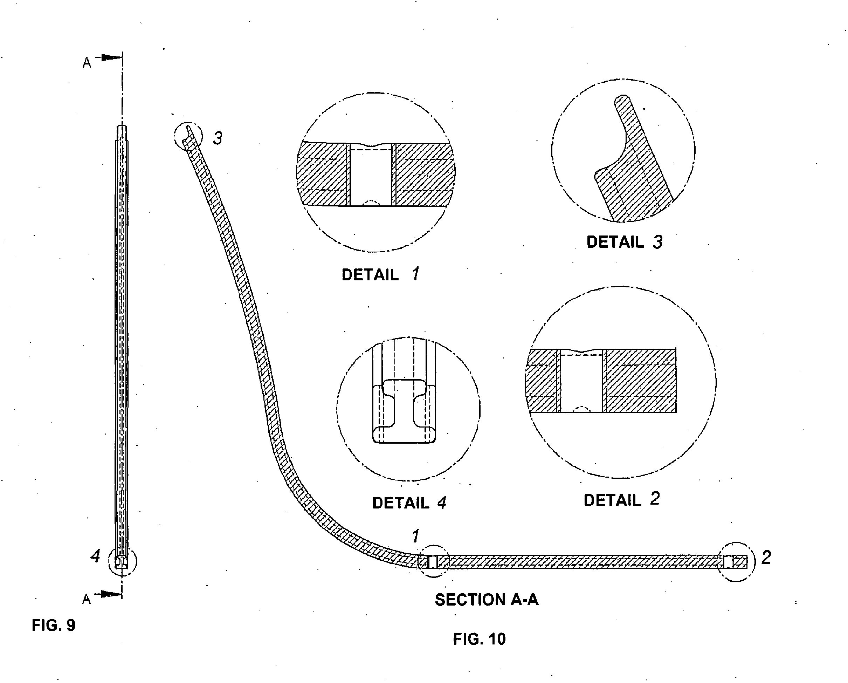

In relation to figure No. 9 we can appreciate a frontal view of the new connecting support that is used in the three other embodiments of the invention. We can appreciate the details mark with number 1 and 2 that corresponds to the twisted holes where the screw of connection should pass that should fix the frame of the frame for seat and the base structure that should be fixed to the vehicle. In addition it can be appreciate detail number 3 which corresponds to a fixation extension which has as objective a better adherence of the support that works as a skeleton of the frame for the seat with the polymeric substance that injects to fabricate the frame for the seat. Finally we can appreciate detail number 4 that corresponds to the transversal section of the metallic support that, as we can see, has a profile In I or riel type with the objective of accomplish the necessary adherence between the support and the polymeric material that conform the frame. The support stays totally Inside the frame for the seat giving it the necessary rigidness which stops the variation of the angle between the back and the base of the frame for the seat which is given in the mold to the frame of the frame of the seat according to the state of art and that does not happens In the embodiment that does not take it.

According to the figure No 10 we can see the lateral view of the support of the figure No. 9. In this figure details 1 and 2 show the hole screwed in which goes the connection screw between the frame and the structure. It Is Important to know that this support is fabricated In any material that has the technical requirements necessary for this application as polymeric material, wood or metal, being the best one the metal.

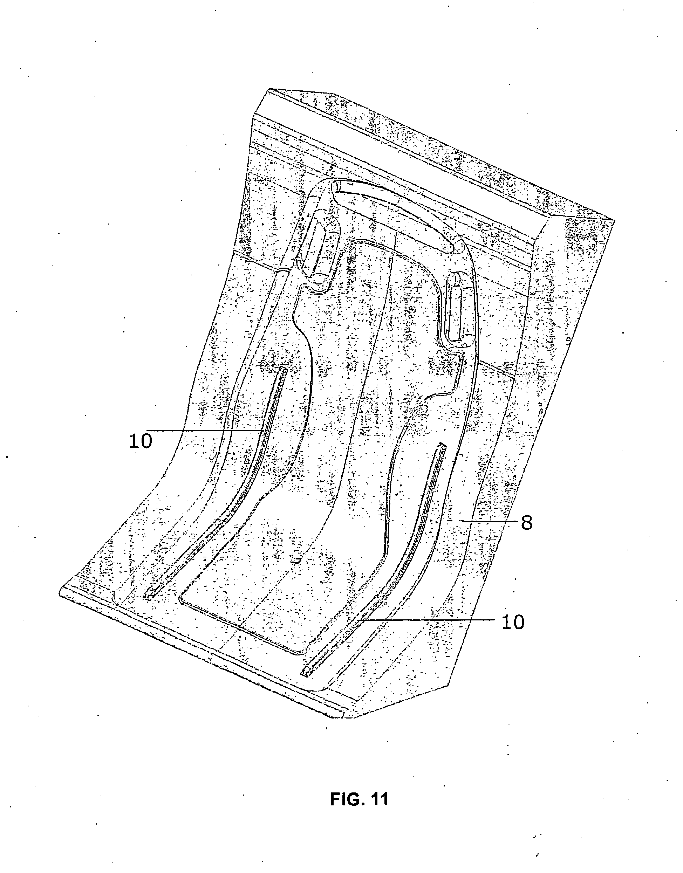

As concerns the figure No. 11 this is an isometric view of the mold to employ on the forth embodiment. In this figure detail number 8 shows the body of the mould and with number 10 the metallic support of figure No. 9 located Inside the mold which will be part of the carcass.

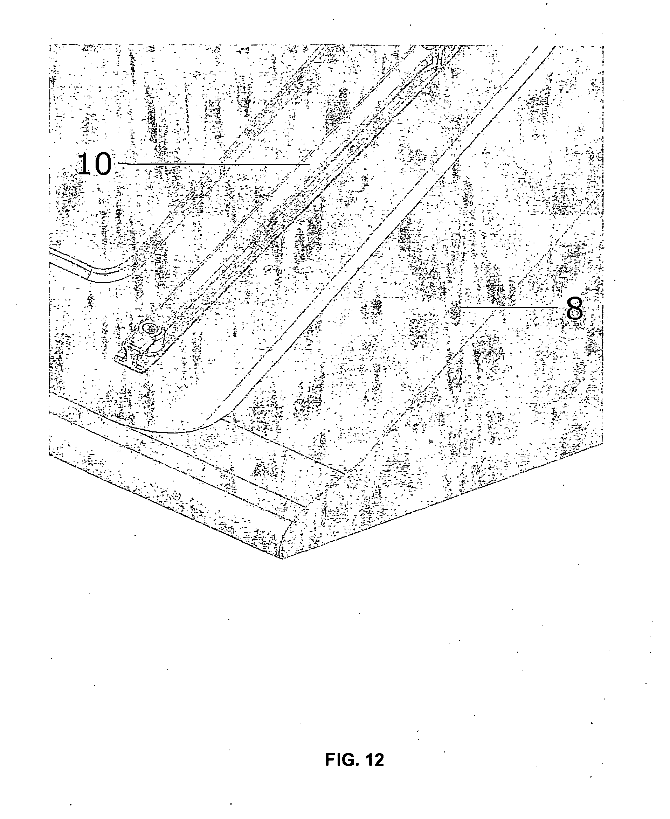

Figure No. 12 Is an amplification of the previous figure. In this one we can see by detail number 10 the Initial extreme of the metallic support and by detail number 8 the body of the mold.

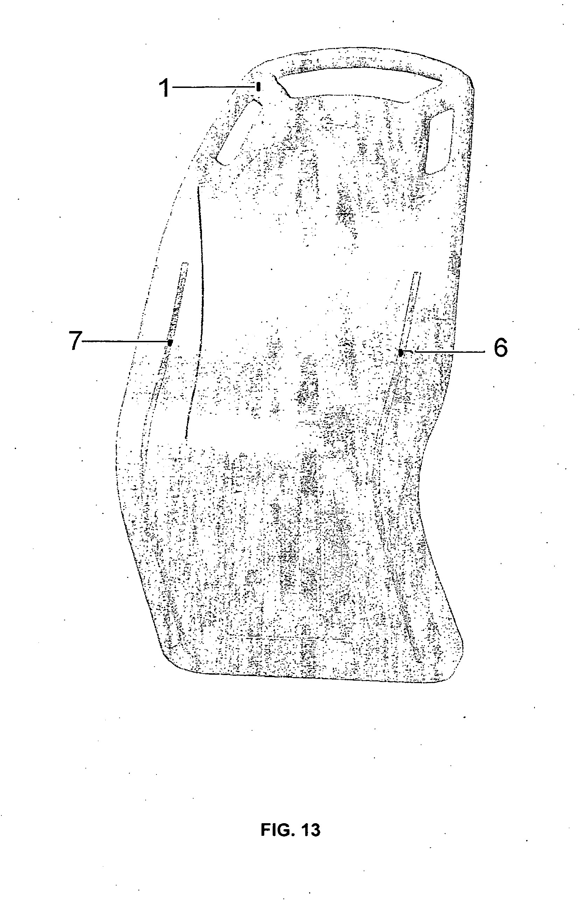

Figure No. 13 is the back view of the Isometric show in figure No 11 where the connecting supports (numerals 6 and 7) are embedded Inside the seat frame and where we can appreciate the face of the "L" profied structure or rail type which remains visible In this front part. This kind of embedded support Is used in embodiments two, three and four of the invention.

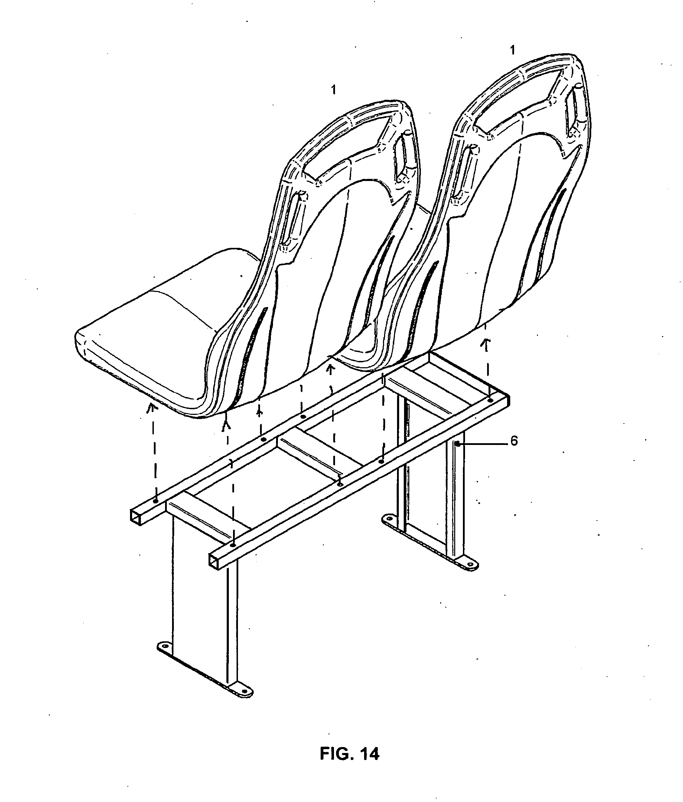

Figure No. 14 Is the exploded view of the ensemble between the second, third and fourth embodiment showed by number 1 in which It is included the metal supports of figure No. 9. Also the structure designated by number 6 where we can appreciate each of the parts involved and the possibility of Joining directly the frame to the support of the structure which is fixed to the vehicle, saving materials and time In the unlonprocess of the frame of the seat to the vehicle.

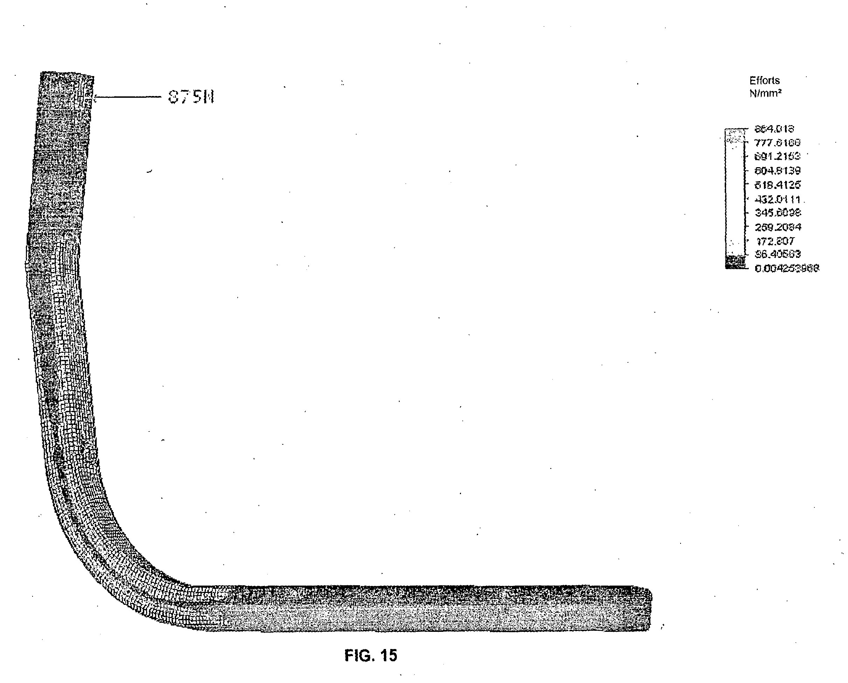

Figure No. 15 is the engineering analysis (CAE) of efforts and displacements simulated by a computer of the conventional metal support of figure 1. To this support has been applied a force of 875 Newtons. In this we can see that the mayor concentration of efforts is located in the elbow of the part, the zone where It can fail.

Figure No. 96 is a detail view of the result of the analysis of the efforts made to the mentioned support In the previous figure. In this figure we can appreciate a closer view to the fall.

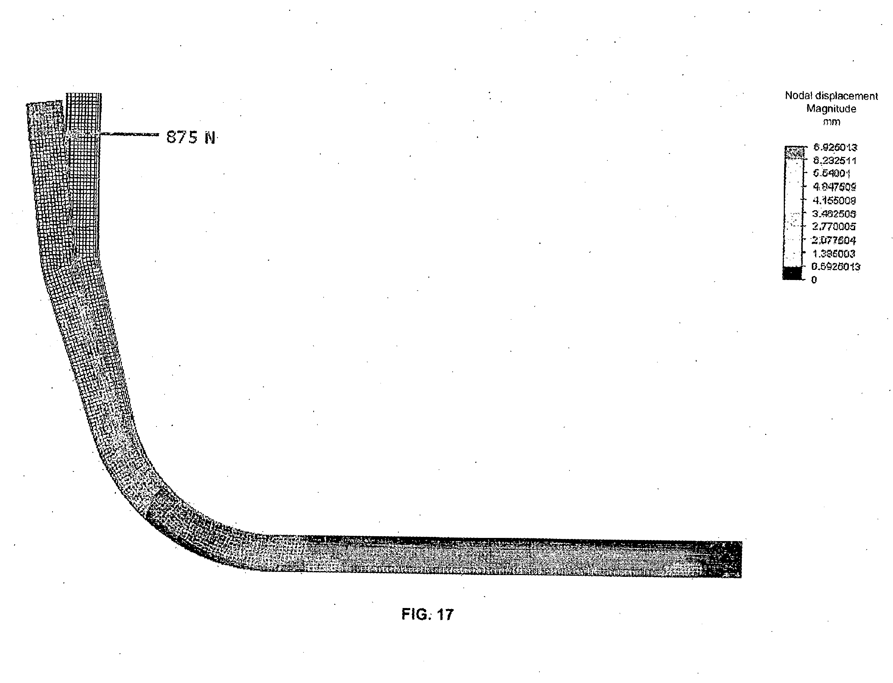

Figure No. 17 is a lateral view of the result of the analysis on the displacement of the conventional support. The heddle without the tone variation that we can observe is the original position of the support without the application of force in which we can appreciate the levels of the movement.

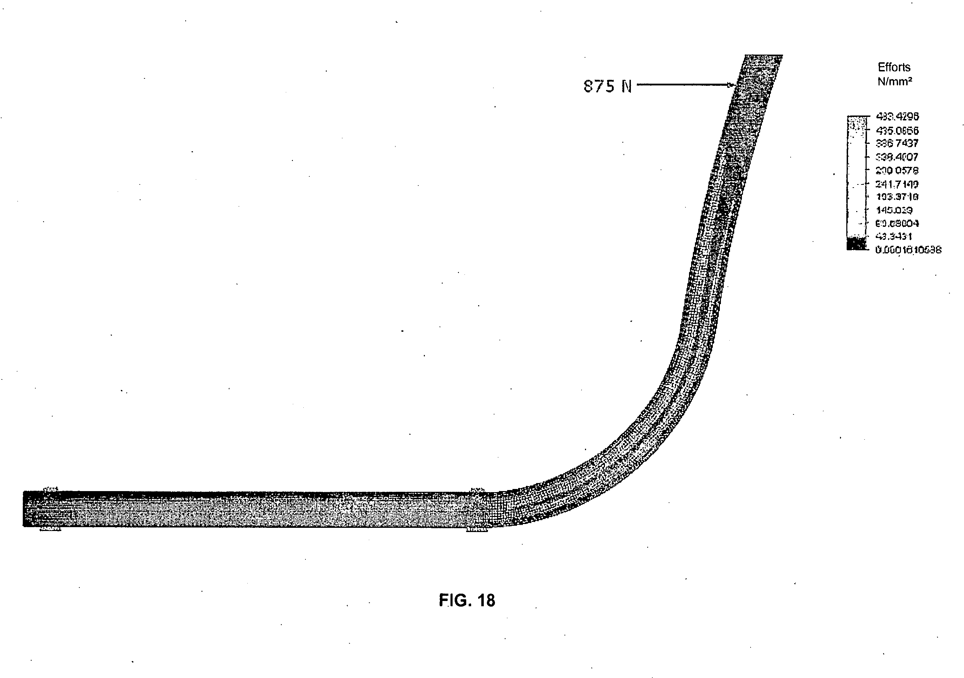

Figure No. 18 is the lateral view of the effort analysis of the new connecting support of figure No. 9. For this analysis it has been applied a charge of 875 Newton.

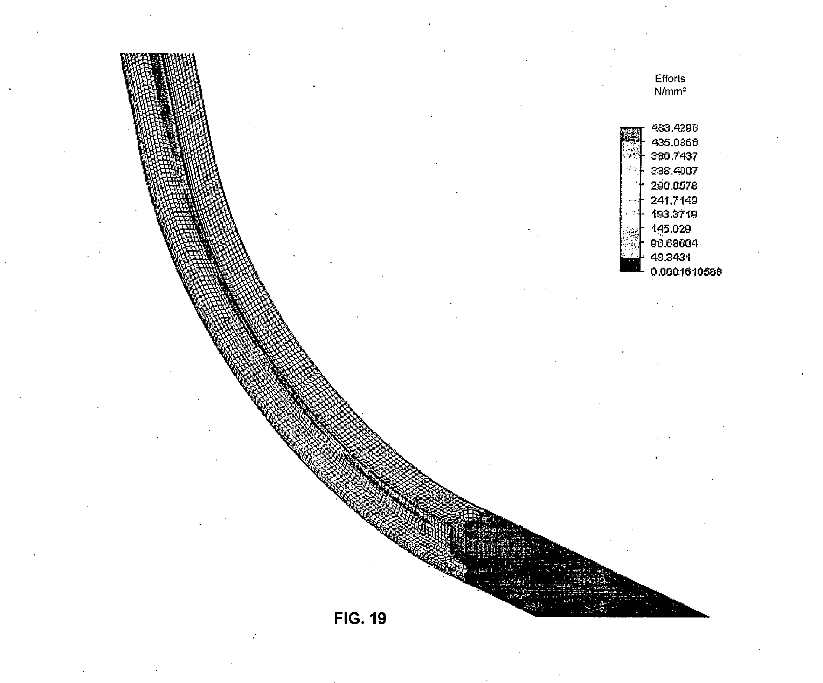

Figure No. 19 is a detail view or closer view of the analysis of efforts of the new support. In this region the most quantity of the effort is concentrated.

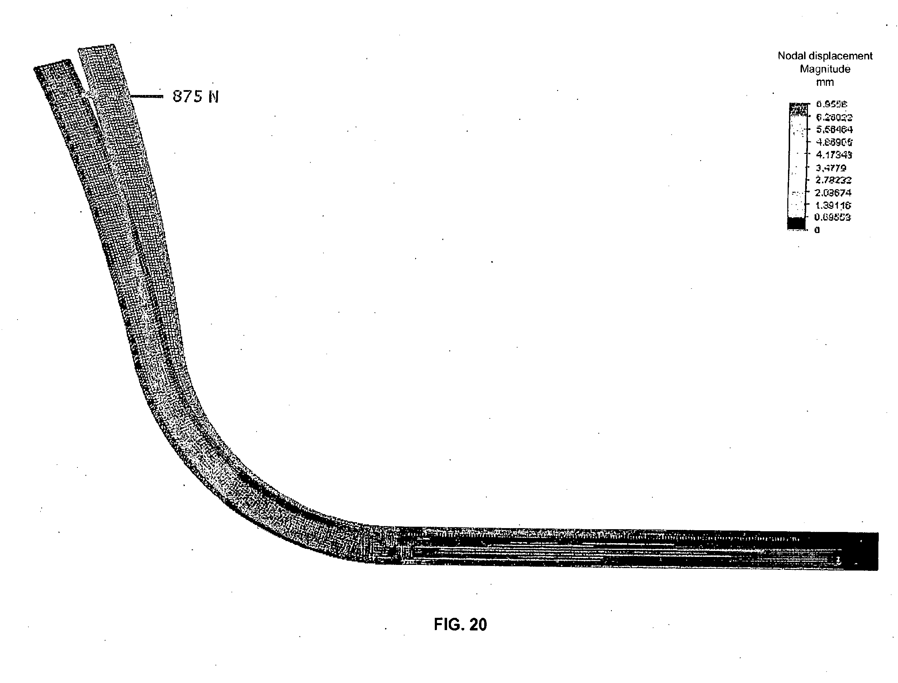

Figure No. 20 is a lateral view of the result of the analysis in the displacement of the new support. The heddle without the tone variation that we can observe is the original position of the support without application of any force in which we can appreciate the levels of the displacements.

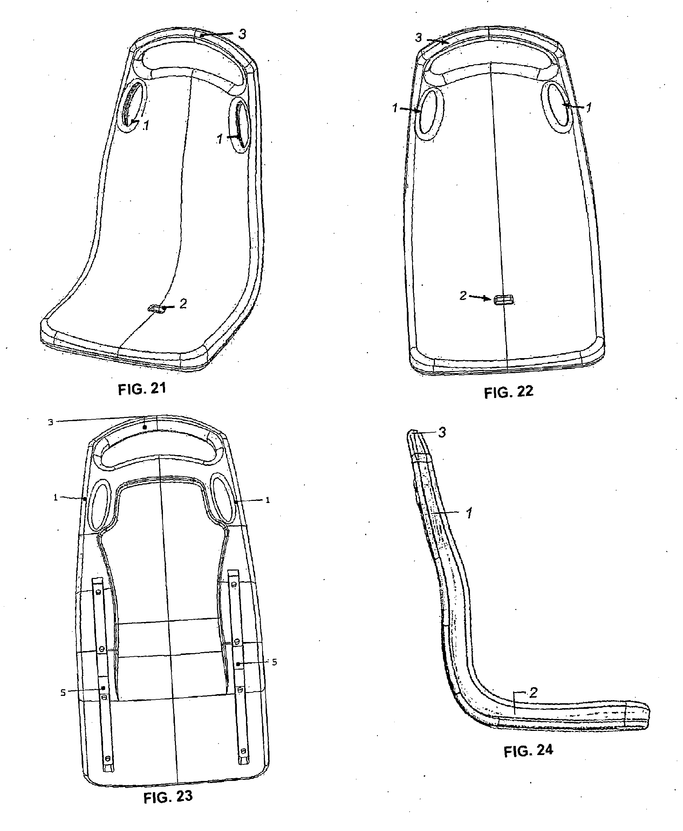

In figure No. 21 we can observe in detail the first embodiment of frame seat. In which this frame for seat is made in a polymeric material that may be any material made fort this purpose but it is better the polyethylene of high density. The frame of the seat has a nonskid design, in this case a corrugate that cannot be appreciated in the image. In addition it has a hole or perforation that avoids the accumulation of any liquid substance on the base of the seat. It also has groove that runs through the higher part of the back of the frame that is part of the principal handle. It also has two longitudinal grooves that run vertically through the lateral part of the sides that are part of the lateral handles. The hardness of the material makes the acts of vandalism difficult and besides makes easier the cleaning when it has been stained. On the other hand, the hole makes impossible the accumulation of substances like water or detergent or other liquid substances that may fall accidentally and accumulate on the base of the seat. The number 1 stand out the lateral handles for holding on, number 2 indicates the drain hole and number 3 shows the principal handle for holding on.

On the other hand figures No. 22, 23 and 24 shows the frontal, backward and lateral view of the first embodiment of the frame for the seat of the invention. This is the only embodiment of the invention that employ the conventional metallic support that is appreciated on the figure No. 1 and by the way is the embodiment less used of the invention.

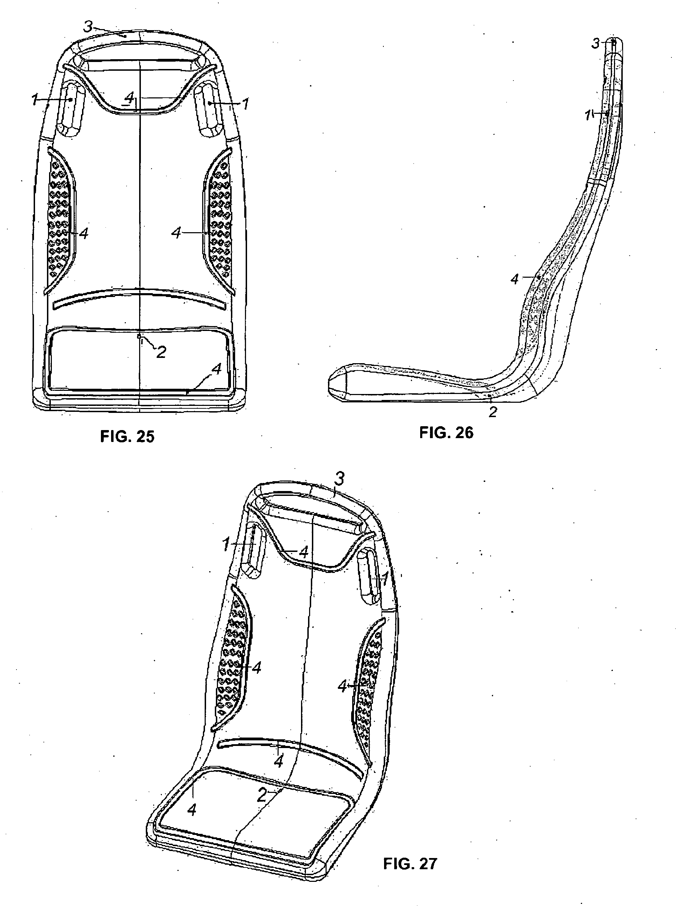

Figure No. 25 is a frontal view of the second embodiment of the frame of the seat. In this figure we can appreciate a nonskid zone (4) which is located on the lateral left side and lateral right side of the back of the frame just as we can see in the picture. This zone is composed by geometric variation in relief that helps the costumer add to the frame and stops his movement. These nonskid zones give more resistance to the back of the seat. However this embodiment does not have a nonskid surface on the base of the seat. In addition it has a hole or perforation that avoids that any liquid substance accumulates on the base of the seat. It has a groove that runs through the higher part of the back of the seat which has the principal handle for holding on over it (3). And also has two longitudinal grooves that conforms the lateral (right and left) handles for holding on (1) that runs through the lateral parts of the sides of the back of the frame of the seat.

Figures No. 26 and 27 corresponds to the lateral and isometric view of the embodiment previously shown. This embodiment has the new connecting support shown in figures 9 and 10 which is embeded in the polymeric material.

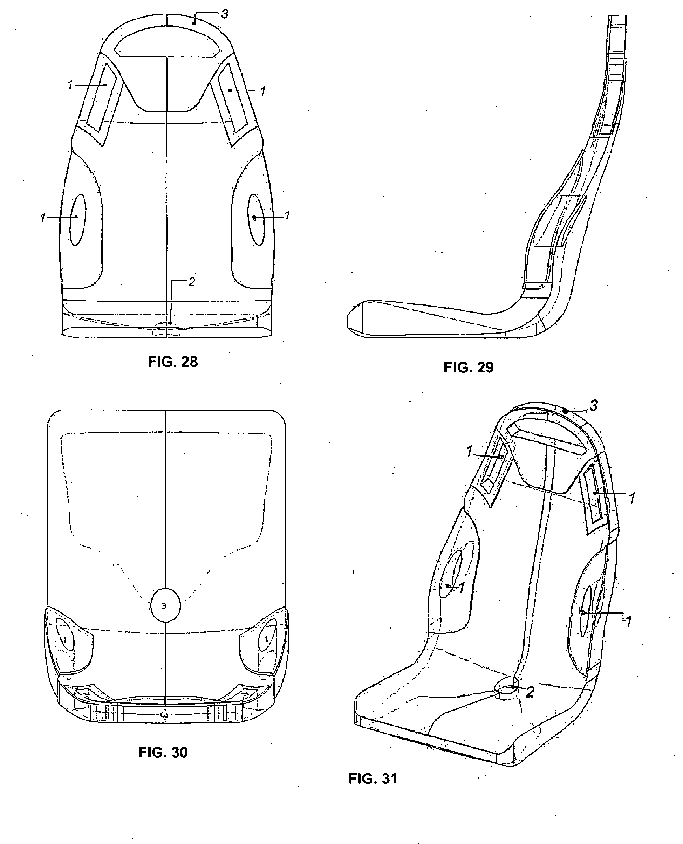

Figure No. 28 is the third embodiment of frame for seats. In this figure in number 1 are shown the lateral handles for holding on and in the low side of the back of the frame (left and right side) other handles that have the double function to operate as sit belts. Number 2 shows the drain hole and number 3 the principal handle for holding on. With the exception of the previous embodiments, this one does not count with a nonskid zone but it has the option to put a sit belt or a harness.

The figures No. 29, 30 and 31 shows the lateral, superior and isometric view of this embodiment. This embodiment possesses the new connecting support illustrated in figures 9 and 10 which, as we said before, are embeded in the polymeric material from which the seat's frame is elaborated.

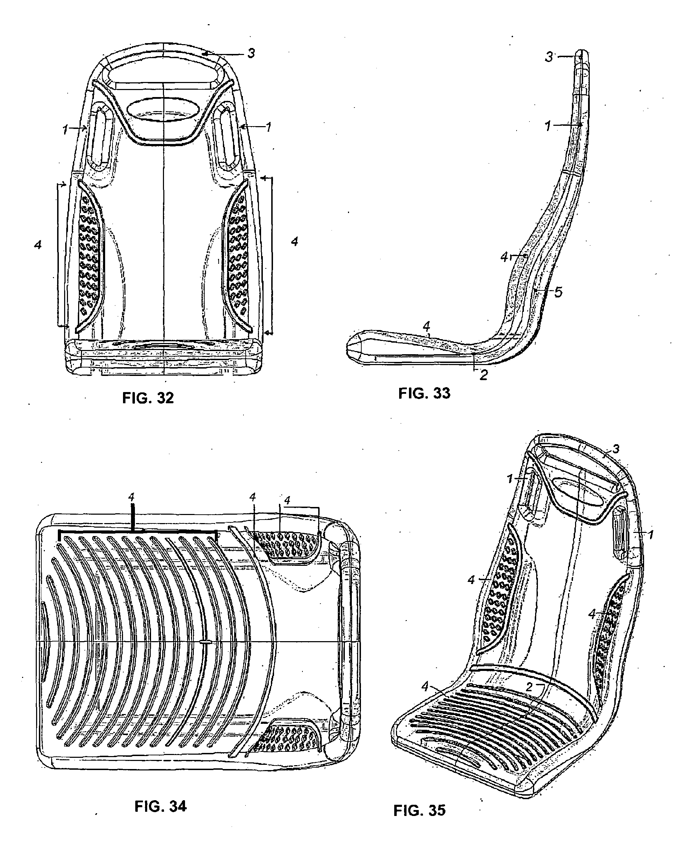

No. 32 figure is the fourth seat's frame embodiment. In this embodiment the non-skid zone identified with No.4 numeral, the superior handle (3) and the lateral handles (1) can be appreciated. As we can appreciate in the figure and its related figures 33, 34 and 35 which correspond the lateral, superior and isometric views and the non-skid zone can be found in both right and left sides of the back of the seat in a similar way with No. 2 embodiment and, additionally, this zone is extended in the whole seat's frame base that gives to the back and to the base of the seat's frame better mechanical resistance. This embodiment, as all the embodiments seen before, counts with a hole (2) that prevents liquid accumulation, a rabbet that goes along of the back of the seat's frame superior part which is located under the main handle for holding on (3) and two longitudinal rabbets which conform the lateral handles for right and left holding (1) that are located vertically in the lateral parts of the back of the seat's flanks. This embodiment possesses the new connecting support illustrated in figures 9 and 10 which, as we said before, are embed in the polymeric material from which the seat's frame is elaborated.

No. 36 figure is the superior view of the last embodiment with a possible variation en the seat's frame base where we can appreciate a "fish thorn" design. Above the central line or thorn's axis is located the drainage hole, this has, as finality, to ease the water's flow or detergents dislodge that might be used, and to avoid their accumulation.

About the fabrication of the seat's frame, the process of extrusion blow molding of the state of art can be used. In a detailed way, the fabrication process consists in the fixation of this frames (extrusion blow molding process) to the respective structure where is necessary the employment of eight (8) female screws and two (2) metallic conventional supports (see No. 1 to 5 figures). These female screws are located inside the mould as a metallic insert that are adhered to the plastic after making the blowing process. At the end of this process the seat's frame is taken out form the mould and the stage of cooling begins where the piece contracts itself in four percent (4%). When it contracts it can appear an angular variation of the back of the seat's frame that can be seen with the eye while two pieces are located in a lateral way.

In order to reduce the costs and fabrication time of the seat's frame by the extrusion blow molding process of the state of art, a metallic support from figure No. 9 will be employed. This support includes two screwed holes that work as a female screw, eliminating this way the necessity of using different screws. These supports are located inside the mould as a metallic insert (see figures No. 11 and 12) that adhere themselves to the plastic after making the blowing process. The support has a special "I" section (see figureNo.10, detail No. 4) that permits the seat's frame intern walls to adhere themselves completely to the support. The metallic support also helps to maintain the inclination angle of the back of the seat because this element gives rigidness and produces a movement restriction.

When we compare the fabrication method where we employ the screw-subjection system and conventional support in an independent way against the fabrication with support method that includes screws, we can find a 34% of saving in the costs of fabrication. See table No. 1. Screw-fabrication method Vs. Support fabrication with screws included.

**Table No.1. Screw-fabrication method Vs. Support fabrication with screws included.**

| **Subjection with screws and conventional support system** | | | |
|---|---|---|---|
| **DESCRIPTION** | **COST UNIT** | **QUANTITY/FRAME** | **COST SUBTOTAL** |
| **Subjection screw M8x1.25x10** | **$225** | **8** | **$1.800** |
| **Conventional** | **$2.950** | **2** | **$5.900** |
| **metallic support** | | | |
| **SUBJECTION SYSTEM TOTAL COST** | | | $7.700 |
| | | | |

| **SUBJECTION WITH SUPPORT THAT INCLUDES SCREWED HOLES THAT WORK AS FEMALE SCREWS SYSTEM** | | | |
|---|---|---|---|
| **DESCRIPTION** | **COST UNIT** | **QUANTITY/FRAME A** | **COST SUBTOTAL** |
| Metallic screwed support | $2200 | 2 | $4.400 |
| **NEW SYSTEM SUBJECTION COST TOTAL** | | | $4.400 |

In order to ratify this, a comparative analysis of efforts and displacements of the conventional support in figure No.1 against the new connecting support of figure No. 9 has been made. This analysis was made with the aid of software of finite elements (CAE). The data employed for the simulation analysis appears in table No. 2

**Table No. 2. Parameters employed in the comparative simulation of the support efforts and displacements analysis**

| **DESCRIPTION** | **VALUE** |
|---|---|
| Colombian technique norm | 4901 - 2 section 2.1.11 |
| Earth's gravity Unit: mm/s2 | 9814.56 |
| Applicated charge Unit: Newton | 875 |
| Type of analysis | Static |
| Support fabrication material | ASTM A36 |
| Joint components simulation | Soldering |

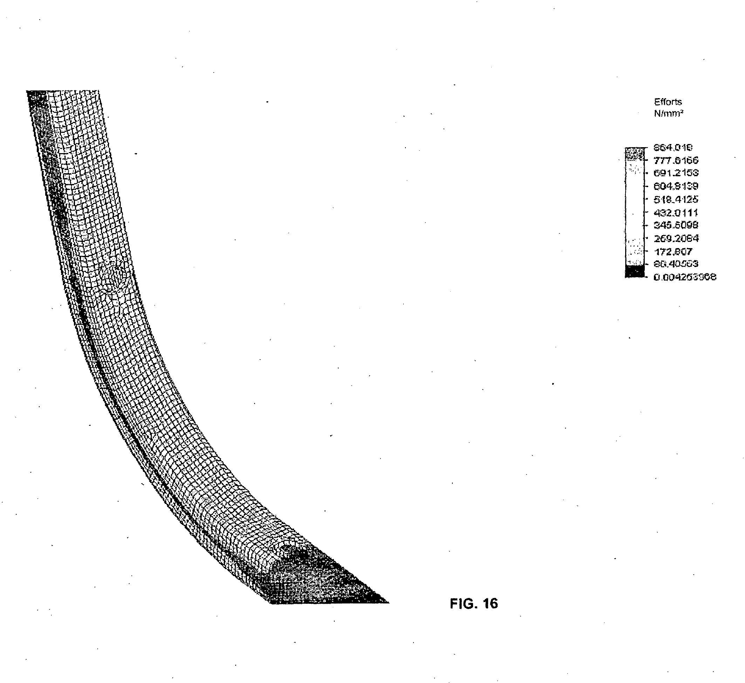

The obtained results at efforts level for the comparative analysis of the supports appear in table No. 3. It is observed that all efforts are reduced to half; the maximum effort is reduced from 864 N/mm2 to 483 N/mm2. We can conclude that the safety factor with the new support is approximately doubled, it passes from 8.9 to 15.9 improving the useful life of the piece and augmenting the trustworthiness for the passenger if an accident or anything unforeseen appears. **See figures No. 15 to 20.**

**Table No. 3. Comparative table of efforts hold up by the two options of supports applying an 875 Newton charge**

| **Conventional support** | **New support** | **Description** |
|---|---|---|
| 864.01 | 483.42 | **Maximum effort (N/mm2)** |
| 345.60 | 338.40 | **Medium effort (N/mm2)** |
| 86.40 | 48.34 | **Minimum effort (N/mm2)** |
| 777.221 | **77.221** | **Material cut resistance (N/mm2)** |
| **8.9** | **15.9** | **Safety factor** |

The results obtained for the comparative analysis of the supports are shown on table No. 4

**Table No. 4. Comparative table of displacements hold up by the two options of supports applying an 875 Newton charge.**

| **Conventional support** | **New support** | **Description** |
|---|---|---|
| 6.92 | 6.95 | **Maximum displacement (mm)** |
| 3.46 | 3.47 | **Medium displacement (mm)** |
| 0.69 | 0.69 | **Minimum displacement (mm)** |

This invention is not limited to what has been described above, its scope being defined by the appended claims

## Claims

1. A seat frame comprising a back, a base, and two connecting supports (6, 7) which are embedded Inside the seat frame, **characterized**
**in that** it further comprises a perforation or a hole (2) In the base, a wide hole which extends along the width of an upper part of the back and which forms part of a main handle (3), and two longitudinal holes which extend vertically along lateral parts of the back and which form part of lateral handles (1).

2. The seat frame according to claim 1, further comprising a designed non-skid zone (4).

3. The seat frame according to claim 2, wherein the designed non-skid zone (4) is provided exclusively in the right and left flanks of the back of the seat frame.

4. The seat frame according to claim 1, wherein the designed non-skid zone (4) is provided in both right and left flanks of the back and extends into the whole base of the seat frame.

5. The seat frame according to any one of claims 2 to 4, wherein the designed non-skid zone (4) is corrugated.

6. The seat frame according to any of the preceding claims, comprising an additional hole in each of the right and left inferior parts of the back of the seat, said additional hole forming part of an additional handle (1) for holding on which is adapted to operate in an optional way as a fastening mechanism for a safety belt or harness.

7. The seat frame according to any of the preceding claims, wherein the material used for its fabrication is a polymeric material.

8. The seat frame according to claim 7, wherein the polymeric material is principally high density polyethylene.

9. The seat frame according to claim 7 or 8, wherein each connecting support (6, 7) comprises an "L" profiled rail, threaded holes adapted to receive connection screws that hold the seat frame with a base structure secured to the vehicle's body, and a fixation extension that gives a better adherence to the connecting support which operates as the seat frame skeleton with the polymeric substance which Is Injected to make the seat frame.

## Patentansprüche

1. Ein Sitzgestell, das ein Rückenteil, eine Basis, und zwei verbindende Abstützungen (6,7) umfasst, die innerhalb des Sitzgestells eingebettet sind,
**dadurch gekennzeichnet, dass**
es des Weiteren eine Perforation oder ein Loch (2) in der Basis, ein weites Loch, welches sich entlang der Breite eines oberen Teils des Rückenteils erstreckt und welches einen Teil des Hauptgriffes (3) bildet, und zwei longitudinale Löcher, welche sich vertikal entlang seitlicher Teile des Rückenteils erstrecken und die einen Teil der seitlichen Griffe (1) bilden, umfasst.

2. Ein Sitzgestell nach Anspruch 1, das eine ausgebildete nichtrutschende Zone (4) umfasst.

3. Ein Sitzgestell nach Anspruch 2, wobei die ausgebildete nichtrutschende Zone (4) in beiden rechten und linken Flanken des Rückenteils bereitgestellt ist.

4. Ein Sitzgestell nach Anspruch 1, wobei die ausgebildet nichtrutschende Zone (4) nur in beiden rechten und linken Flanken des Rückenteils bereitgestellt ist und sich über die ganze Basis des Sitzgestells erstreckt.

5. Ein Sitzgestell nach einem der Ansprüche 2 bis 4, wobei die ausgebildete nichtrutschende Zone (4) gewellt ist.

6. Ein Sitzgestell nach einem der vorhergehenden Ansprüche, das ein zusätzliches Loch in jedem der rechten und linken unteren Teile des Rückenteils des Sitzes umfasst, wobei besagtes zusätzliches Loch einen Teil eines zusätzlichen Griffes (1) zum Halten bildet und welches dazu geeignet ist in einer optionalen Weise als Befestigungsmechanismus für einen Sicherheitsgurt oder Geschirr zu dienen.

7. Ein Sitzgestell nach einem der vorhergehenden Ansprüche, wobei das Material, das zu dessen Herstellung verwendet wurde, ein Polymermaterial ist.

8. Ein Sitzgestell nach Anspruch 7, wobei das Polymermaterial hauptsächlich aus hochdichtem Polyethylen besteht.

9. Ein Sitzgestell nach Anspruch 7 oder Anspruch 8, wobei jede der verbindenden Abstützungen (6,7) eine "L"-förmige Schiene, zur Aufnahme von verbindenden Schrauben, die das Sitzgestell an einer Basisstruktur des Fahrzeugaufbaus sichern, eingerichtete Gewindelöcher und einen Befestigungsausbau umfassen, der ein besseres Haltevermögen zu der verbindenden Abstützung bedingt, die als das Gerüst des Sitzgestells zusammen mit einer Polymersubstanz dient, die injiziert wird, um das Sitzgestell zu bilden.

## Revendications

1. Armature de siège comprenant un dossier, une embase et deux supports de montage (6, 7) qui sont incorporés à l'intérieur de l'armature de siège, **caractérisée en ce qu'**elle comprend en outre une perforation ou un trou (2) dans l'embase, un trou large qui s'étend sur la largeur d'une partie supérieure du dossier et qui fait partie d'une poignée principale (3), et deux trous longitudinaux qui s'étendent verticalement le long de parties latérales du dossier et qui font partie de poignées latérales (1).

2. Armature de siège selon la revendication 1, comprenant en outre une zone antidérapante profilée (4).

3. Armature de siège selon la revendication 2, dans laquelle la zone antidérapante profilée (4) est disposée exclusivement dans les flancs droit et gauche du dossier de l'armature de siège.

4. Armature de siège selon la revendication 1, dans laquelle la zone antidérapante profilée (4) est disposée dans les deux flancs droit et gauche du dossier et se prolonge dans toute l'embase de l'armature de siège.

5. Armature de siège selon l'une quelconque des revendications 2 à 4, dans laquelle la zone antidérapante profilée (4) est ondulée.

6. Armature de siège selon l'une quelconque des revendications précédentes, comprenant un trou supplémentaire dans chacune des parties inférieures droite et gauche du dossier du siège, ledit trou supplémentaire faisant partie d'une poignée supplémentaire (1) offrant une prise adaptée pour servir éventuellement de mécanisme de fixation pour une ceinture ou un harnais de sécurité.

7. Armature de siège selon l'une quelconque des revendications précédentes, dans lequel la matière utilisée pour sa fabrication est un polymère.

8. Armature de siège selon la revendication 7 ou 8, dans laquelle le polymère est principalement du polyéthylène haute densité.

9. Armature de siège selon la revendication 7 ou 8, dans laquelle chaque support de montage (6, 7) comporte un rail à profil en L, des trous filetés aptes à recevoir des vis de montage qui retiennent l'armature de siège sur une structure d'embase fixée à la carrosserie d'un véhicule, et un prolongement de fixation qui donne au support de montage servant d'ossature d'armature de siège une meilleure adhérence au polymère injecté pour fabriquer l'armature de siège.
